# EUROPEAN PATENT SPECIFICATION

(11) **EP 1 595 460 B1**
(45) Date of publication and mention of the grant of the patent: **08.11.2006**
(21) Application number: 05252828.8
(22) Date of filing: 09.05.2005
(51) Int. Cl.: A23L 1/0534, A23L 1/0532, A23L 3/44, A23C 20/02

(54) **Freeze-dried food product**
Gefriergetrocknetes Lebensmittel
Produit alimentaire lyophilisé

(30) Priority: 11.05.2004 JP 2004140574; 17.08.2004 JP 2004237492
(43) Date of publication of application: 16.11.2005
(73) Proprietor: Shin-Etsu Chemical Co., Ltd., Chiyoda-ku, Tokyo (JP)
(72) Inventor: Fukasawa, Miyuki, Shin-Etsu Chemical Co. Ltd., Joetsu-shi Niigata-ken (JP); Hayakawa, Kazuhisa, Shin-Etsu Chemical Co. Ltd., Joetsu-shi Niigata-ken (JP)
(74) Representative: Stoner, Gerard Patrick

(56) References cited:
- WO-A-20/04007558
- DE-A1- 4 328 329
- GB-A- 978 818
- PATENT ABSTRACTS OF JAPAN vol. 1995, no. 05, 30 June 1995 (1995-06-30) & JP 07 051017 A (SHIN ETSU CHEM CO LTD), 28 February 1995 (1995-02-28)
- PATENT ABSTRACTS OF JAPAN vol. 016, no. 140 (C-0926), 8 April 1992 (1992-04-08) & JP 03 297357 A (SHIN ETSU CHEM CO LTD), 27 December 1991 (1991-12-27)
- PATENT ABSTRACTS OF JAPAN vol. 1999, no. 10, 31 August 1999 (1999-08-31) & JP 11 137201 A (MARUOU:KK), 25 May 1999 (1999-05-25)

## Description

This invention relates to a freeze-dried food product which maintains its shape during rehydration and during cooling after the rehydration and offers a mouth feel comparable to the original food.

### BACKGROUND

Conventional freeze-dried food products include ingredients for instant food products such as dry ingredients for instant Chinese noodles. In many countries, the ever changing life style of people poses an increasing need for instant food products because of convenience and ease. There have been developed a variety of instant food products including frozen foods, retort pouch foods and dry foods. Inter alia, dry foods from which water has been removed are lightweight, compact in shape, and do not need the temperature control needed for frozen foods, so that they have superiority in many aspects including package, transportation, storage, distribution, and cooking. Among dry foods, those utilizing the freeze vacuum drying technology are advantageous in that they can be processed without damaging the taste of food materials. There is a continuous need for a food utilizing the freeze drying technology.

With respect to the freeze drying of vegetables, for example, JP-A 57-39733 describes a method involving blanching a raw vegetable, admixing a thickening, gelling or stabilizing agent, and freeze drying in a plate form. Most vegetables which have been processed by the freeze drying technology are leafy vegetables such as cabbage, garlic chive and spring onion, while starchy vegetables such as potato and pumpkin have been out of consideration.

The reason is that if potato is heat treated and freeze dried without adding additives, the dry potato will go out of shape when rehydrated with hot water. It is generally possible to avoid deformation of freeze-dried foods during rehydration if their size is small enough. Thus, starchy vegetables such as potato must take the form of dice with a maximum size of the order of 1 cm.

Tofu, a traditional protein food in Japan is very difficult to preserve because of an increased water content. Although various measures such as packages have been devised, it is unlikely to preserve tofu over a long term of one month or more.

For the preservation of foods of this type, a freezing or drying technique has been generally employed. However, if tofu is frozen, protein is freeze modified to alter its structure so that it will not recover the state prior to freezing. In fact, a food called "kori tofu" is available as a frozen and dried form of tofu. It is known that even when rehydrated, this product does not recover the original mouth feel prior to freezing.

Known methods capable of avoiding freeze modification are by adding starches or saccharides to soybean milk as described in JP-A 54-122755, JP-A 55-153574, and JP-A 11-137201. Although freeze-dried tofu made by these methods recovers a tofu-like mouth feel when rehydrated with hot water, the mouth feel thus recovered is firm like cotton tofu rather than smooth like silken tofu.

To improve the mouth feel, it was attempted to add casein as described in JP-B 63-64186. This method, however, failed to make large blocks of tofu because if freeze-dried tofu is shaped as a block of more than about 1 cm on one side, it will go out of shape during rehydration.

The inventors proposed in JP-A 7-51017 a method of preparing freeze-dried tofu through addition of methyl cellulose so that a large freeze-dried tofu block can be rehydrated with hot water to recover a smooth mouth feel like silken tofu. This freeze-dried tofu block effectively maintains its shape during rehydration, but is still insufficient to maintain its shape upon cooling after the rehydration.

The aim herein is to provide new and useful freeze-dried food products and methods of making them. Particular preferred aspects include (i) a freeze-dried food product having a relatively large-sized shape which does not go out of shape during rehydration and during cooling after the rehydration, and (ii) a product which when rehydrated, offers a good mouth feel comparable to the original.

The inventors have discovered that a freeze-dried food product comprising a water-soluble cellulose ether and agar, even in large size, can be made which does not go out of shape during rehydration and during cooling after the rehydration, and when rehydrated, offers a good mouth feel comparable to the original.

As used herein, the term "rehydration" means that a freeze-dried food product is hydrated again with hot water, typically having a temperature of 60°C to 90°C.

The present invention provides a freeze-dried food product comprising a water-soluble cellulose ether and agar. In a preferred embodiment, the water-soluble cellulose ether is methyl cellulose and/or a hydroxyalkyl alkyl cellulose. The freeze-dried food product is typically freeze-dried tofu.

The freeze-dried food product of the invention, even in large size, does not go out of shape during rehydration and during cooling after the rehydration, and offers a sensory acceptability comparable to the original.

The methods disclosed herein for making such products are a further aspect of the invention.

### FURTHER EXPLANATIONS; OPTIONS AND PREFERENCES

The freeze-dried food product of the invention comprises a water-soluble cellulose ether and agar. It is prepared by admixing an ordinary food or optionally processed food with cellulose ether and agar, and freeze drying the resulting food.

The food material of which the freeze-dried food product of the invention is made may be any ordinary food which may be optionally processed. Examples include fragmented vegetables, minced animal meat, minced fish meat, soybean milk, soybean milk powder, and the like. The food material may be in any of fragmented, granular, powdery, ground, minced, milled and otherwise processed forms as long as the form is suitable to intimately mix with water-soluble cellulose ether and agar.

An aqueous solution of the water-soluble cellulose ether used herein has a reversible thermally gelling ability. That is, the cellulose ether aqueous solution gels and becomes good in shape retention at or above a certain temperature. Thus, the cellulose ether serves to prevent the food product from going out of shape during rehydration. On the other hand, agar gels and becomes good in shape retention at or below a specific temperature. Thus the agar serves to prevent the food product from going out of shape during cooling after rehydration. The combined use of water-soluble cellulose ether and agar both having a reversible thermal gelling ability ensures preparation of a freeze-dried food product capable of retaining its shape.

More particularly, by adding agar and an aqueous solution of water-soluble cellulose ether or water-soluble cellulose ether powder and water to an ordinary food material which has optionally been ground, forming the resulting food material into a suitable shape and then freeze drying, a freeze-dried food product having a shape in which pores results from removal of water is obtainable. When the freeze-dried food product is immersed in a suitable volume of hot water for several minutes for rehydration, hot water penetrates into the food product so that the dry water-soluble cellulose ether and agar start dissolving therein. The food product is rehydrated without losing its shape because the water-soluble cellulose ether gels at or above a certain temperature.

On eating, the rehydrated food product is often cooled to an appropriate temperature for a particular food. At this point, the water-soluble cellulose ether resumes its normal solution state from the gelled state while the agar gels at or below a specific temperature so that the food product maintains its shape until eating. The rehydrated, cooled food product can be served while maintaining unchanged shape and a mouth feel comparable to the original.

The water-soluble cellulose ether used herein may be any among cellulose ethers which are made water soluble by etherifying celluloses. Preferred cellulose ethers are methyl celluloses having methyl groups, and hydroxyalkyl alkyl celluloses having methyl or ethyl groups, some of which are replaced by hydroxyalkyl groups such as hydroxypropyl or hydroxyethyl groups.

Preferred among the methyl celluloses are water-soluble methyl celluloses having a degree of methoxyl substitution of about 19 to about 32% by weight. Preferred among the hydroxyalkyl alkyl celluloses are hydroxypropyl methyl celluloses having a degree of methoxyl substitution of about 19 to about 32% by weight and a degree of hydroxypropoxyl substitution of about 4 to about 12% by weight, hydroxyethyl methyl celluloses having a degree of methoxyl substitution of about 19 to about 32% by weight and a degree of hydroxyethoxyl substitution of about 4 to about 12% by weight, and hydroxyethyl ethyl celluloses having a degree of ethoxyl substitution of about 5 to about 20% by weight and a degree of hydroxyethoxyl substitution of about 4 to about 60% by weight. These cellulose ethers may be used alone or in admixture of two or more.

It is noted that the degree of substitution can be determined by the Zeisel-GC method described in J. G. Gobler, E. P. Samsel and G. H. Beaber, Talanta, 9, 474 (1962).

The method of preparing the cellulose ether used herein is not particularly limited. It may be prepared using, for example, linters derived from high-molecular-weight cotton as described in JP-A 3-146501.

The cellulose ether used herein has a weight average molecular weight (Mw) which is preferably in a range of 20,000 to 1,000,000 g/mol as measured by the GPC-MALLS method, though not limited thereto. A cellulose ether with Mw of less than 20,000 g/mol has a weaker thermal gelling ability, so that the freeze-dried food product may lose its shape during rehydration. A cellulose ether with Mw of more than 1,000,000 g/mol may lead to a hard mouth feel.

An appropriate amount of the cellulose ether added is usually from 1 to 6 parts by weight per 100 parts by weight of the solids in the relevant food. An amount of 1.2 to 3 pbw is more preferred, with an amount of 1.4 to 2 pbw being most preferred. With less than 1 pbw of cellulose ether, the food product may go out of shape after rehydration. More than 6 pbw of cellulose ether may form a gel layer around the freeze-dried food product during rehydration, which prevents hot water from penetrating into the interior, resulting in incomplete rehydration.

The term "solids" in the relevant food refers to in the case of a food like a vegetable, a product obtained by crushing, optional heat treatment, and grinding; in the case of a food like animal or fish meat, a minced meat; and in the case of a food like tofu, solids in soybean milk or soybean milk powder. That is: comminuted, particulate or mashed.

The agar used herein is not particularly limited and may be any of agars derived from many origins. Preferred are polysaccharides obtained by extraction with hot water from the ccll membrane material of red algae seaweed such as Ceylon moss (Gracilaria lichenoides) and "ogonori" (Gracilaria verrucosa).

An appropriate amount of the agar added is 0.05 to 1.0 part by weight per 100 parts by weight of the solids in the relevant food although the amount is not particularly limited as long as it does not compromise the benefits of the invention. An amount of 0.1 to 0.5 pbw is more preferred. Less than 0.05 pbw of agar may allow the food product to go out of shape when cooled or allowed to cool. More than 1.0 pbw of agar can deteriorate the mouth feel.

In a preferred embodiment of the invention, a gelling agent such as sodium alginate may be added for further improving the shape retention, typically in an amount of 0.05 to 1.0 part by weight, more preferably 0.1 to 0.5 part by weight per 100 parts by weight of the solids in the relevant food. Also, a binder (other than the water-soluble cellulose ether) such as xanthane gum, locust bean gum or guar gum may be added as long as it does not compromise the benefits of the invention. For seasoning purposes, various seasonings may be added at the same time as the water-soluble cellulose ether and agar are added as long as they do not compromise the benefits of the invention.

In a practical implementation, a food material like vegetable, animal meat or fish meat is heat treated if necessary, and ground using a cooking utensil such as a food processor or potato masher, to which a water-soluble cellulose ether in powder form or in aqueous solution form and agar in solution form (by dissolving in hot water) are added. At this point, the food material desirably has a water content of about 40% to about 70% by weight, more desirably 50% to 60% by weight. At a water content of less than 40 wt%, the ground food material may be poorly binding together, with a likelihood of going out of shape during rehydration. At a water content of more than 70 wt%, the food product becomes too porous after freeze-drying, because pores are formed where water is removed by freeze-drying. When rehydrated, such a porous food product becomes spongy, leading to a substantial loss of mouth feel.

The resultant mixture of the ground vegetable, animal meat or fish meat and predetermined amounts of the water-soluble cellulose ether, agar and other optional ingredients is filled in a pallet or molded into a suitable shape, then frozen at -20°C to -40°C for about 20 to about 50 hours, and dried in vacuum, yielding a freeze-dried food product. The equipment used in the mixing, freezing and drying steps are not particularly limited and any of well-known units may be used.

In an alternative embodiment, a food like tofu is prepared by dispersing the water-soluble cellulose ether and agar in water, and adding the dispersion to soybean milk or a dispersion of soybean milk powder in water. The amount of water used is preferably 500 to 1,500 parts, more preferably 600 to 1,000 parts by weight per 100 parts by weight of the solids in the soybean milk or the soybean milk powder.

In the preparation of freeze-dried tofu according to the invention, a coagulant is used which may be calcium sulfate, delta-glucono-lactone, calcium chloride, magnesium chloride or magnesium sulfate. The amount of the coagulant used is preferably 2 to 6 parts, more preferably 3.5 to 5.5 parts by weight per 100 parts by weight of the solids in the soybean milk or the soybean milk powder.

A freeze-dried tofu block is prepared by mixing soybean milk or soybean milk powder with predetermined amounts of the water-soluble cellulose ether, agar, water and other optional ingredients, heating the mixture until boiling, cooling below 15°C, adding a predetermined amount of coagulant, filling the mixture in a pallet or the like, and heating it for coagulation. The coagulated product is then frozen at -20°C to -40°C for about 20 to about 50 hours, and dried in vacuum. The conditions under which the mixture is heated for coagulation include a temperature of 70 to 100°C and a time of 20 minutes to 1 hour, and preferably a temperature of 80 to 90°C and a time of 30 to 45 minutes. The equipment used in the mixing, freezing and drying steps are not particularly limited and any of well-known units may be used.

The freeze-dried food product thus obtained may be of relatively large pieces e.g. dimensioned 2-8 cm by 2-8 cm by 2-8 cm and having a volume of about 8 to about 500 cm³. The freeze-dried food product can be rehydrated with hot water, typically having a temperature of 60 to 90°C, without losing its shape. Once rehydrated, the food product does not lose its shape even when cooled to 5 to 20°C. The food product as rehydrated and cooled offers a mouth feel comparable to the original food.

### EXAMPLE

Examples of the present invention are given below by way of illustration and not by way of limitation.

### Example 1

200 g of soybean milk powder (Daiichi Protein Co., Ltd.), 2.0 g of sodium alginate (Wako Pure Chemical Industries, Ltd.), 1.5 g of agar (Ina Food Co., Ltd.), and 5.0 g of methyl cellulose (Shin-Etsu Chemical Co., Ltd., Mw 292,000 g/mol, methoxyl substitution 29.5 wt%) were intimately mixed. The mixture was combined with 150 g of hot water and stirred for 30 minutes on a boiling-water bath. With stirring, the dispersion was cooled below 15°C. The cool dispersion was combined with 15 g of a 6 wt% aqueous solution of calcium sulfate (Wako Pure Chemical Industries, Ltd.) as a coagulant, stirred, and filtered through gauze. The filtrate was poured into a commercial ice tray and heated for 30 minutes on a boiling-water bath. The coagulated product was cooled, frozen at -40°C for 20 hours, and then dried in vacuum, yielding a freeze-dried tofu block containing methyl cellulose and agar (dimensioned 5 × 3 × 3 cm).

The freeze-dried tofu block was immersed in hot water for rehydration and thereafter, cooled. The tofu block maintained its shape both during the rehydration and during the cooling. An actual tasting this confirmed full rehydration and a smooth mouth feel like fresh silken tofu.

### Comparative Example 1

A freeze-dried tofu block was prepared as in Example 1 except that the methyl cellulose was omitted. It went out of shape when immersed in hot water.

### Comparative Example 2

A freeze-dried tofu block was prepared as in Example 1 except that the agar was omitted. It maintained its shape when immersed in hot water, but lost its shape when cooled thereafter.

### Example 2

Potato, 180 g, was boiled in water for 10 minutes, peeled, and mashed by a household potato masher, obtaining 100 g of mashed potato. Agar (Ina Food Co., Ltd.), 0.6 g, was added to 25 g of hot water and fully dissolved therein by heating. To 100 g of the mashed potato, 1.0 g of methyl cellulose (Shin-Etsu Chemical Co., Ltd., Mw 292,000 g/mol, methoxyl substitution 29.5 wt%) in powder form was added, and the agar solution was then added. The ingredients were thoroughly mixed. The mixture had a water content of 60% by weight. The mixture was divided into 20-gram portions, which were shaped, frozen at -40°C for 20 hours, and then dried in vacuum, yielding freeze-dried potato dice containing methyl cellulose and agar (dimensioned 4 × 4 × 4 cm).

The freeze-dried potato dice were immersed in hot water for rehydration and thereafter, cooled. The potato dice were rehydrated throughout and maintained their shape both during the rehydration and during the cooling. An actual tasting them confirmed a mouth feel like boiled potato.

### Comparative Example 3

Freeze-dried potato dice were prepared as in Example 2 except that the methyl cellulose was omitted. They went out of shape when immersed in hot water.

### Comparative Example 4

Freeze-dried potato dice were prepared as in Example 2 except that the agar was omitted. They maintained their shape when immersed in hot water, but lost their shape when cooled thereafter.

### Example 3

Scraped carrot, 120 g, was boiled in water for 10 minutes, and ground by a household food processor, obtaining 140 g of carrot paste. The carrot paste was wrapped with gauze and squeezed for separating into 100 g of carrot paste and 40 g of juice. Agar (Ina Food Co., Ltd.), 0.6 g, was added to 25 g of the juice and fully dissolved therein by heating. To 100 g of the carrot paste, 1.0 g of methyl cellulose (Shin-Etsu Chemical Co., Ltd., Mw 292,000 g/mol, methoxyl substitution 29.5 wt%) in powder form was added, and the agar solution was then added. The ingredients were thoroughly mixed. The mixture had a water content of 60% by weight. The mixture was divided into 20-gram portions, which were shaped, frozen at -40°C for 20 hours, and then dried in vacuum, yielding freeze-dried carrot dice containing methyl cellulose and agar (dimensioned 4 × 4 × 4 cm).

The freeze-dried carrot dice were immersed in hot water for rehydration and thereafter, cooled. The carrot dice were rehydrated throughout and maintained their shape both during the rehydration and during the cooling. An actual tasting them confirmed a mouth feel like boiled carrot.

### Comparative Example 5

Freeze-dried carrot dice were prepared as in Example 3 except that the methyl cellulose was omitted. They went out of shape when immersed in hot water.

### Comparative Example 6

Freeze-dried carrot dice were prepared as in Example 3 except that the agar was omitted. They maintained their shape when immersed in hot water, but lost their shape when cooled thereafter.

## Claims

1. A freeze-dried food product comprising water-soluble cellulose ether and agar.

2. A freeze-dried food product of claim 1, wherein the water-soluble cellulose ether is methyl cellulose, hydroxyalkyl alkyl cellulose or both.

3. A freeze-dried food product of claim 1 or 2 which is freeze-dried tofu.

4. A method of preparing a product according to any one of claims 1 to 3, comprising combining a food preparation with water-soluble cellulose ether and agar and then freeze-drying.

5. A method according to claim 4 in which the food preparation is in comminuted, particulate or mashed form for combination with the water-soluble cellulose ether and agar and is then shaped into larger pieces.

6. A method according to claim 4 or 5 in which the food preparation is fragmented vegetable, minced animal meat, minced fish meat, soybean milk or soybean milk powder.

7. A method according to any one of claims 4 to 6 in which the amount of cellulose ether is from 1.2 to 3 parts by weight per 100 parts by weight of food solids.

8. A method according to any one of claims 4 to 7 in which the amount of agar is from 0.1 to 0.5 parts by weight per 100 parts by weight of food solids.

9. A method according to claim 5 in which the food preparation is said vegetable or meat and in which the food preparation is combined with the cellulose ether and agar which are in aqueous solution, leading to a water content after combination of from 50% to 60% by weight.

## Patentansprüche

1. Gefriergetrocknetes Nahrungsmittelprodukt, das wasserlöslichen Celluloseether und Agar umfasst.

2. Gefriergetrocknetes Nahrungsmittelprodukt nach Anspruch 1, worin der wasserlösliche Celluloseether Methylcellulose, Hydroxyalkylalkylcellulose oder beides ist.

3. Gefriergetrocknetes Nahrungsmittelprodukt nach Anspruch 1 oder 2, das gefriergetrockneter Tofu ist.

4. Verfahren zur Herstellung eines Produkts nach einem der Ansprüche 1 bis 3, umfassend das Kombinieren eines Nahrungsmittelpräparats mit dem wasserlöslichen Celluloseether und Agar und anschließendes Gefriertrocknen.

5. Verfahren nach Anspruch 4, worin das Nahrungsmittelpräparat zur Kombination mit dem wasserlöslichen Celluloseether und Agar in zerkleinerter, partikulärer oder pürierter Form vorliegt und dann zu größeren Stücken geformt wird.

6. Verfahren nach Anspruch 4 oder 5, worin das Nahrungsmittelpräparat zerkleinertes Gemüse, faschiertes Tierfleisch, faschierter Fisch, Sojamilch oder Sojamilchpulver ist.

7. Verfahren nach einem der Ansprüche 4 bis 6, worin die Menge des Celluloseethers 1,2 bis 3 Gewichtsteile pro 100 Gewichtsteile Nahrungsmittelfeststoffe beträgt.

8. Verfahren nach einem der Ansprüche 4 bis 7, worin die Agarmenge 0,1 bis 0,5 Gewichtsteile pro 100 Gewichtsteile Nahrungsmittelfeststoffe beträgt.

9. Verfahren nach Anspruch 5, worin das Nahrungsmittelpräparat das Gemüse oder Fleisch ist und das Nahrungsmittelpräparat mit dem Celluloseether und Agar kombiniert wird, die in wässriger Lösung vorliegen, was einen Wassergehalt nach der Kombination von 50 bis 60 Gew.-% ergibt.

## Revendications

1. Produit alimentaire lyophilisé comprenant de l'éther de cellulose soluble dans l'eau et de l'agar-agar.

2. Produit alimentaire lyophilisé selon la revendication 1, dans lequel l'éther de cellulose soluble dans l'eau est la méthylcellulose, une hydroxyalkylalkylcellulose ou les deux.

3. Produit alimentaire lyophilisé selon la revendication 1 ou la revendication 2, qui est du tofu lyophilisé.

4. Procédé de préparation d'un produit selon l'une quel - conque des revendications 1 à 3, comprenant la combinaison d'une préparation alimentaire avec l'éther de cellulose soluble dans l'eau et l' agar-agar, suivie d'une lyophilisation.

5. Procédé selon la revendication 4, dans lequel la préparation alimentaire se présente sous une forme pulvérisée, particulaire ou broyée pour la combinaison avec l'éther de cellulose soluble dans l'eau et l'agar-agar et elle est ensuite formée en morceaux plus gros.

6. Procédé selon la revendication 4 ou la revendication 5, dans lequel la préparation alimentaire est un légume fragmenté, de la viande animale hachée, de la chair de poisson hachée, du lait de soja ou de la poudre de lait de soja.

7. Procédé selon l'une quelconque des revendications 4 à 6, dans lequel la quantité d'éther de cellulose se situe dans la plage de 1,2 à 3 parties en poids pour 100 parties en poids de solides alimentaires.

8. Procédé selon l'une quelconque des revendications 4 à 7, dans lequel la quantité d'agar-agar se situe dans la plage de 0,1 à 0,5 parties en poids pour 100 parties en poids de solides alimentaires.

9. Procédé selon la revendication 5, dans lequel la préparation alimentaire est ledit légume ou ladite viande ou ladite chair et dans lequel la préparation alimentaire est combinée avec l'éther de cellulose et l'agar-agar qui sont en solution aqueuse , donnant une teneur en eau après combinaison dans la plage de 50% à 60% en poids.
